# EUROPEAN PATENT SPECIFICATION

(11) **EP 3 390 285 B1**
(45) Date of publication and mention of the grant of the patent: **13.11.2019**
(21) Application number: 16820227.3
(22) Date of filing: 16.12.2016
(51) Int. Cl.: C02F 1/461, C05B 11/06, C02F 1/66, C02F 103/34, C02F 1/20, C02F 101/10

(54) **METHODS FOR TREATING INDUSTRIAL WASTEWATER BY ELECTROLYSIS**
VERFAHREN ZUR BEHANDLUNG VON INDUSTRIEABWASSER DURCH ELEKTROLYSE
PROCÉDÉS DE TRAITEMENT DES EAUX RÉSIDUAIRES INDUSTRIELLES PAR ÉLECTROLYSE

(30) Priority: 18.12.2015 NO 20151752
(43) Date of publication of application: 24.10.2018
(73) Proprietor: Yara International ASA, 0213 Oslo (NO)
(72) Inventor: LACOMBE, Marie, N-0266 Oslo (NO); CHLADEK, Petr, N-3944 Porsgrunn (NO); KONGSTEIN, Ole Edvard, N-7091 Tiller (NO)
(74) Representative: De Clercq & Partners
(86) International application number: PCT/EP2016/081337
(87) International publication number: WO 2017/103042

(56) References cited:
- EP-A1- 2 208 928
- EP-A2- 0 841 305
- JP-A- H1 199 391
- JP-A- 2005 177 671
- KR-A- 20130 002 910
- US-A- 5 376 240
- US-A1- 2007 205 162

## Description

### Technical Field

This invention relates to a novel method for treating industrial wastewater using electrolysis, and more particularly nitrophosphate fertilizer wastewater or wastewater from other mineral or organo-mineral fertilizer processes.

### Background of the Invention

Industrial wastewater is one of the important pollution sources of the water environment. During the last century, a huge amount of industrial wastewater was discharged into rivers, lakes and coastal areas. This resulted in serious pollution problems in the water environment and caused negative effects to the eco-system.

There are many types of industrial wastewater based on different industries and contaminants; each sector produces its own particular combination of pollutants. Like the various characteristics of industrial wastewater, the treatment of industrial wastewater must be designed specifically for the particular type of effluent produced.

In many industrial systems, the goal is to reduce the amount of wastewater being discharged into the environment by recirculating the wastewater effluent back into the industrial system itself.

Within the fertilizer industry, the nature of the wastewater may vary depending on the type of fertilizer being produced and the specific processes involved.

Mineral fertilisers contain one or more primary (major) nutrients nitrogen (N), phosphorus (P) or potassium (K) in inorganic form or as urea or cyanamide. The primary nutrients N, P and K are required by plants in large or moderate amounts. Depending on the formulation, mineral fertilisers also contain other nutrients required by plants to a minor degree, such as Ca, Mg, and S. Trace elements required in small quantities are B, CI, Cu, Fe, Mn, Mo, Zn. Fertilizers are classified in terms of their major nutrient contents: straight fertilisers generally contain only one major or primary nutrient (N, P or K) whereas complex fertilizers contain two or more major nutrients (NP, PK or NPK and more particularly NP or NPK fertilizers).

There are two common processes for producing complex fertilizers, namely the mixed acid process and the nitrophosphate process. In the nitrophosphate process specifically, rock phosphate is initially dissolved in excess nitric acid and Ca(NO₃)₂^{∗}4H₂O is removed from the digested raw phosphate solution by cooling and filtration. Then, by neutralizing the resulting filtrate, a solution containing mainly ammonium nitrate and ammonium-calcium phosphates is formed. By evaporation of the solution, an AN-MAP-DCP (ammonium nitrate - monoammonium phospohate - dicalcium phospohate) slurry-melt is formed, to which may be added potassium chloride/potassium sulphate salts. By using these starting components and the described process a large range of fertilizer formulas may be provided.

The main effluent components in NP or NPK wastewater are ammonia, nitrate, fluoride and phosphate, and the wastewater may also contain heavy metals from the phosphate rock, such as Cd, Hg and Zn.

The Austrian Federal Environment Agency issued a report in 2002 entitled State of the Art for the Production of Fertilisers with Regard to the IPPC-Directive, Monographien Band 105, M-105 (see: http://www.umweltbundesamt.at/fileadmin/site/publikationen/M105.pdf and accessed 5 October 2015; see also Best Available Techniques for Pollution Prevention and Control in the European Fertilizer Industry, Booklet No. 7 of 8: Production of NPK Fertilizers by the Nitrophosphate Route, European Fertilizer Manufacturers' Association, 2000). In the Austrian Report, there is a discussion on specific methods for reducing wastewater emissions and they included the following 7 recommendations as state-of-the-art for the nitrophosphate process specifically:
1. Avoidance of antifoaming agents for the phosphate rock digestions;
2. Recycling of scrubbing liquor arising from treatment of the phosphate rock digestion off-gases into the production process;
3. Recycling of washing water for sand washing into the production process;
4. Avoidance of direct cooling/quenching, e.g. co-condensation of exhaust vapours;
5. Recycling of scrubbing liquor from waste gas scrubbing of the ammoniation into the production process;
6. Combined waste gas scrubbing of the neutralization/evaporation and granulation/drying units; and
7. Application of buffer reservoirs in order to compensate fluctuations of volume and load of the wastewater.

There are a multitude of recommendations to address different types of contamination. However, chloride removal is not one of them. Effectively, chloride is not typically considered as an important contaminant in fertilizer wastewater. This may be due to the relative low levels of chloride seen in fertilizer wastewater which may only be on the order of 1000 ppm. For comparison, drinking water has maximum levels of 250 ppm, whereas salt water contains 35,000 ppm and brine has in excess of 50,000 ppm. As such, the levels seen in fertilizer wastewater are not generally considered to be an environmental concern.

JP H11 99391 A discloses treating industrial wastewater to remove chloride, including directing wastewater to a electrochemical cell. The formed catholyte is alkaline.

US5376240, JP2005177671, KR20130002910, EP0841305,US2007/205162 and EP2208928 disclose the use of acid to dissolve mineral precipitation.

### Summary of the Invention

The present invention provides, a method of treating acidic wastewater from an industrial plant as defined in claim 1.

The steps a. to g. are generally performed in subsequent order although the step c. may be performed after or simultaneously with step b.

The electrochemical cell can then be subjected to an additional step of treating the wastewater by electrolysis so that both the anode chamber and the cathode chamber contain treated wastewater.

In one embodiment, the treated wastewater from the cathode chamber is removed, more particularly recirculated back to the industrial plant. The treated wastewater from the anode chamber is directed to the cathode chamber and new wastewater is added into the anode chamber. This process can then be repeated with treated wastewater from the cathode being discarded or recirculated to the industrial plant and new wastewater being added in batches to the anode chamber. In this manner, the pH of the cathode chamber is properly and efficiently controlled, while scaling is not observed at the cathode. Wastewater from fertilizer plants often comprises phosphate. If the wastewater comprises phosphate, scaling problems on the cathode during electrolysis can be expected, but may be completely or partly avoided by keeping the pH in the catholyte acidic. As used herein, the catholyte is the aqueous solution in contact with the electrode in the cathode chamber. As used herein, that the "pH in the catholyte is acidic" means that the pH measured in the catholyte or in a sample of the catholyte is lower than 7.0. Depending on it's initial pH and the electrolysis process, the catholyte may be kept acidic without addition of acids or acidic aqueous solutions. During electrolysis, the pH in catholyte will tend to increase, but the catholyte may be kept acidic by addition of acids or acidic aqueous solutions like the treated wastewater from the anode chamber. It is found that a pH below 4 in a catholyte comprising phosphate is suitable for many common electrodes. The pH in the catholyte may be below pH 4.0. As used herein, a pH below 4.0 includes any measured pH value that would be rounded to 3.9 or lower. The pH in the catholyte may be below pH 3.5, for example in the range of -1 to 3.4. Due to less phosphate loss in the form of scaling, the acidic pH may also have a positive effect on the yield of fertilizer plants recirculating the wastewater. Thus, both the anolyte and the catholyte may have an acidic pH during the electrolytic treatment.

In one embodiment, the method may further comprise in step d. and optionally step h. measuring the pH of the catholyte and if required adding an acid or acidic solution to the catholyte.

In the present invention the method further comprises the step:
h. treating the new wastewater in the anode chamber with electrolysis while the pH in the treated wastewater catholyte is acidic.

Optionally, the present invention further comprises the steps:
i. removing the treated wastewater catholyte from the cathode chamber,
j. directing the treated wastewater from the anode chamber to the cathode chamber, and
k. adding new wastewater into the anode chamber.

In another embodiment of the present invention, the method further comprises the steps:
h. treating the new wastewater in the anode chamber with electrolysis while the pH in the treated wastewater catholyte is acidic, and optionally
I. removing the treated wastewater from both the cathode chamber and the anode chamber and directing new wastewater to both the anode chamber and the cathode chamber of the electrochemical cell.

In these embodiments of the invention, the method may further comprise repeating the steps d. to g.

In an alternate embodiment, the treated wastewater from both electrode chambers can be removed and new wastewater is directed to the electrochemical cell. The treated wastewater can be combined and discarded or recirculated back to the industrial plant as before. The new wastewater may be directed towards both the anode chamber and the cathode chamber or only to the anode chamber with another suitable electrolyte being directed towards the cathode chamber.

It is found that treatment of the wastewater by electrolysis performed in a batchwise mode for removal of chloride may be safer and more electrochemically efficient than a continuous treatment, especially if the wastewater is recirculated back to a fertilizer plant producing compositions comprising ammonium nitrate. As used herein, "treatment of the wastewater by electrolysis performed in a batchwise mode" means that the wastewater is treated by electrolysis for a period of time sufficient to reduce the chloride concentration in the anolyte to a desired level before the anolyte is transferred to the cathode chamber. In contrast, a continuous treatment would require either longer residence time or larger electrochemical cell to obtain the same level of chloride at the outlet. As used herein, the anolyte is the aqueous solution in contact with the electrode in the anode chamber. The chloride concentration in the anolyte may be reduced to less than 500 ppm, less than 350 ppm or less than 250 ppm.

In more particular embodiments, there may be an additional step of removing dissolved gas from the treated wastewater from the anode chamber before it is directed to the cathode chamber. Accordingly, the method may further comprise after step d. and optionally after step h. removing dissolved gas from the treated wastewater in the anode chamber before performing step f. and optionally before performing step i., where step f. and i. comprise directing the treated wastewater from the anode chamber to the cathode chamber. This may be done by gas sparging, using a stripping tower, applying a vacuum or increasing the temperature (for example by boiling). In particular, a stripping tower is used or a vacuum is applied. In more particular embodiments, the dissolved gas is oxygen and chlorine and is removed to prevent mixing of oxygen/chlorine and evolved hydrogen in the cathode. Removal of oxygen and chlorine gas from the anolyte may enhance the safety, and the step may conveniently be applied during treatment of the wastewater by electrolysis performed in a batchwise mode. In more particular embodiments, the method of treating wastewater is a method to remove chloride ions from the wastewater. Accordingly, treating the wastewater by electrolysis step involves removing chloride from the wastewater by electrolysis. The chloride concentration may be reduced to less than 500 ppm, less than 350 ppm or less than 250 ppm.

In even more particular embodiments, the electrochemistry is mass transport limited. Accordingly, the electrolysis step may include increasing the mass transport within the electrochemical cell. Common methods of increasing mass transport include: mechanical stirring of the electrolyte, vibrating the electrodes, rotating the electrodes, using ultrasonication the electrode or electrolyte, using 3D electrodes or inert mesh turbulence promoters, or electrolyte jetting.

The electrolysis in step d. and optionally in step h. may be performed for between 5 minutes and 24 hours. In more particular embodiments, the electrolysis may be for between 1 and 8 hours.

In even more particular embodiments, the industrial plant is a fertilizer plant. Even more particularly, the fertilizer plant is a nitrophosphate, other mineral or organo-mineral fertilizer plant.

Further described is also a method of treating wastewater and comprising:
a. directing wastewater comprising chloride and phosphate to an anode chamber and a cathode chamber of an electrochemical cell wherein said chambers are separated by a separator;
b. treating the wastewater by electrolysis while the pH in the catholyte is lower than 7.0
c. removing the catholyte from the cathode chamber, directing the treated wastewater from the anode chamber to the cathode chamber, and adding new wastewater into the anode chamber.

In one particular aspect of the latter embodiment, the pH in the catholyte is lower than 4.0

### Brief Description of the Drawings

Embodiments of the invention are further described hereinafter with reference to the accompanying drawings, in which:
Figure 1 is a schematic of one embodiment of the invention.
Figure 2 is a schematic of an alternate embodiment of the invention.
Figure 3 is a plot of chloride concentration over time following the progress of electrolysis of a sample of wastewater from a fertilizer plant.
Figure 4 is a plot showing the pH profile in the anode chamber and the cathode chamber during the electrolysis shown in Figure 3.
Figure 5 is a plot showing the pH profile in the anode chamber and the cathode chamber during a subsequent electrolysis after following the method of the present invention.
Figure 6 is a plot showing the cell voltage over time at two different wastewater temperatures.

### Detailed Description of the Invention

Chloride can be seen in fertilizer wastewater, particularly wastewater from the nitrophosphate, organic or organo-mineral process. Without being bound by theory, the chloride may have originated from the phosphate rock, depending on the source of phosphate rock. This impurity may be present in only modest concentrations on the order of 1000 ppm. If the wastewater is merely released into the environment, this level of chloride may not present any environmental or regulatory concern. However, if the wastewater is then recirculated back into the fertilizer plant, then chloride when present even in modest amounts can destabilize ammonium nitrate which can become explosive and present a significant safety concern. More particularly, in the process of producing, for example NPK granules, water is evaporated and in doing so, the local concentration of any chloride present can increase substantially. Since ammonium nitrate would also be present, the combination can then become explosive.

Chloride has been identified in other industrial processes as a pollutant that can be removed though typically relatively high concentrations are seen before it is characterized as such. In these circumstances, chloride has been recognized as adding to the solids content and increasing the corrosive character of water. Alternatively, chloride is removed when the end result is drinking water which requires very low levels of chloride to be present, typically less than 250 ppm. Means of treatment are typically demineralization, reverse osmosis, electrodialysis, and evaporation (see Chapter 1 "Water Sources, Impurities and Chemistry", Handbook of Industrial Water Treatment, GE Power & Water,www.gewater.com/handbook/index.jsp, accessed 5 October 2015).

Demineralized water is water that has had almost all of its mineral ions removed, such as cations like sodium, calcium, iron, and copper, and anions such as chloride, nitrate, carbonate, fluoride and sulphate. Demineralization is a chemical process that uses specially manufactured ion-exchange resins, which exchange hydrogen and hydroxide ions for dissolved minerals, and then recombine to form water. Because most non-particulate water impurities are dissolved salts, demineralization produces a high purity water that is generally similar to distilled water, and this process is quick and without scale build-up.

Reverse osmosis involves forcing water through an osmotic membrane that rejects salts and allows water flux under pressures in excess of osmotic pressure. Reverse osmosis is currently the most widely practiced seawater desalination process and produces a permeate desalinated water that lacks ionic constituents and can be too pure for release into the environment. In evaporation, or thermal desalination, water is evaporated and condensed, sometimes in multiple stages, in order to recycle the latent heat of condensation.

Electrochemically, electrodialysis is commonly practiced for desalination. In electrodialysis, salt ions are transferred across ion exchange membranes in a stack under the action of a DC current. The DC current is supplied as a voltage generated at an anode and cathode. Unlike reverse osmosis, the salt concentration of output product water from electrodialysis can be adjusted by adjusting the current applied to the stack. Salt ions are transferred from diluent or product chamber to concentrated saltwater in the concentrate chamber under a direct current electric field applied at the electrodes. A practical concentration factor of five to ten is common; that is, transferring ions from a diluent saltwater with a concentration of 2000 ppm to a concentrate saltwater with a concentration of between 10,000 ppm and 20,000 ppm. Recent patent applications describing eletrodialysis for desalinating contaminated saltwater include US patent application number US2015/0096891 and PCT patent application number WO2014/197966.

While the above techniques are the most commonly used processes for desalination, a search of the patent literature reveals two other electrochemical techniques: electrolysis and capacitive deionization.

Electrolysis is an old technology dating to the 19^{th} century and still used in the chlor-alkali industry where sodium chloride is electrolyzed to produce the chemicals chlorine and sodium hydroxide (caustic soda). However, the process starts with brine, i.e. very high concentrations of sodium chloride on the order of 50,000 ppm. Such high concentrations allow efficient electrolysis. In UK patent application GB2499025, a process is described wherein aggressive decontaminating agents, such as HCI or NaCl, are used in the decommissioning of nuclear facilities. The UK patent application then reports using electrolysis to remove chlorides from the radioactive wastewater. There is no discussion on why chloride is mentioned as a pollutant or any dangers associated therewith. However, a final chloride concentration of merely 5 ppm is also reported and this is not a credible result from simple electrolysis. As mentioned above, the chlor-alkali industry requires chloride concentrations of 50,000 ppm in order for the electrolysis to be efficient. In comparison, regulations for drinking water only require levels less than 250 ppm and there is no suggestion in any of the prior art of using electrolysis to remove chloride in drinking water. Further, no additional techniques are mentioned in GB2499035 as necessary to bring the chloride level down to such a low level.

In comparison, Chinese patent application CN102001776 describes a relatively new process using capacitive deionization (electrosorb technology) in order to reduce the salt concentration seen in various industries, namely the petroleum, chemical, and pharmaceutical industries. Capacitive deionization is an emerging technique promising to be an alternative to reverse osmosis and is based on ion electrosorption (see M.E. Suss et al, Energy Environ Sci, 2015, 8, 2296).

It has been found that electrolysis can be used to treat wastewater from fertilizer plants. In particular, it has been found that electrolysis can actually be used at modest starting levels of chloride concentration of around 1000 ppm, much less than that seen in the chlor-alkali industry where chloride concentrations of 50,000 ppm are necessary for the efficient electrolysis of chloride. Further, electrolysis can be used to bring the chloride concentration to levels lower than 500 ppm and more particularly lower than 350 ppm, and even more particularly lower than 250 ppm. As mentioned above, this can have particular advantages in relation to the nitrophosphate, other mineral or organo-mineral fertilizer processes, and even more particularly when the wastewater is recirculated back to the fertilizer plant.

It has been found that chloride can be removed from wastewater comprising phosphate at an industrial scale. This provides a safer way to recirculate wastewater back to fertilizer plants even if they produce compositions comprising ammonium nitrate, also to fertilizer plants producing compositions comprising ammonium nitrate by melt granulation.

It has also been found that chloride can be efficiently removed from wastewater by electrolysis at elevated temperatures. The anolyte and/or the catholyte may have a temperature over 20°C. In particular, the anolyte and/or the catholyte may have a temperature over 30°C. In particular, the anolyte and/or the catholyte may have a temperature over 40°C. In particular, the anolyte and the catholyte may have a temperature in the range of 30 to 80°C. Even higher temperatures could be used if the method is performed under increased pressure. Operation under increased pressure may reduce the size of any gas treatment equipment and facilitate the chlorine removal upon pressure release.

Electrolysis is a well-known technique and the following discussion on the reactions at the electrodes, as well as the nature of potential electrodes and electrolytes are not meant to limit the generality of the technique to the skilled person.

Treatment of the effluent from the nitrophosphate, other mineral or organo-mineral fertilizer plant in the electrochemical cell facilitates the removal of chloride which is then liberated as chlorine gas. The chlorine gas may then be treated in an off-gas scrubber prior to release of any remaining harmless gases to the atmosphere together with produced oxygen.

Suitable off-gas systems which may be used to scrub the liberated chlorine may, for example, use NaOH as the scrubbing agent. This would then produce NaCl and NaClO, which may be re-used as a decontamination agent. In alternative embodiments of the invention, solid state scrubbers can be employed or a mixture of Cl₂, O₂ and H₂ gases can be burned in a controlled manner.

Typically, the cathode reaction involves the release of hydrogen gas, while oxygen and chlorine are evolved at the anode. It is generally beneficial to separate the anode and cathode reactions through the use of a separator or membrane (porous or ion selective). This may have multiple beneficial results including:
1. Preventing parasitic redox couples (e.g. Fe²⁺/Fe³⁺ and NO₃⁻/NO₂⁻) from reducing the current efficiency;
2. Keeping metal ions away from the cathode in order to minimise the risk of electro-deposition;
3. Separating gas streams (i.e. chlorine/oxygen evolving from the anode and hydrogen at the cathode) for safety reasons and for eventual after treatment since mixing of the gas streams can be explosive or forming hazardous components (this applies to both mixtures of hydrogen and oxygen as well as mixtures of hydrogen and chlorine); and
4. Avoiding the products from reacting with each other.

While a typical cell separates the anolyte and catholyte compartments by a microporous separator or membrane, an undivided cell may also be used for the purpose of the present invention. This alternative approach provides the benefit of a simpler cell design with only one fluid circuit and, of course, removes the requirement for a separator. However, it does not possess the beneficial results discussed above.

The anolyte is the effluent from the fertilizer process, more particularly from the nitrophosphate, other mineral or organo-mineral process, referred to above as the fertilizer wastewater. The catholyte may also be the effluent from the wastewater or a concentrated salt solution, an acid solution such as nitric acid, water or another appropriate solution chosen by a skilled person. In more particular embodiments, the catholyte is the wastewater from the fertilizer plant.

The anode material of the cell should be stable in the electrolyte. In addition, the material should be suitable for both oxygen and chlorine evolution and demonstrate low wear rates for both reactions, as well as low over-potentials for chlorine evolution. It is also desirable that the anode material should show higher over-potentials for other reactions, such as oxygen evolution. Typical materials for use as anode materials include boron-doped diamond, coated titanium (coated with oxides of metals, e.g. iridium oxide, mixed iridium/ruthenium oxide and tin oxide), carbon (graphite) and bulk platinum. In general, electrodes known from the chlor-alkali industry can be used such as a DSA™ electrode from Permascand.

The selection of materials for the cathode materials is not as critical, with the main requirement being for stability in the electrolyte. In this context, stainless steel is particularly suitable, but this in no way limits the number of available materials, and a wide range of other materials which would be readily apparent to a person skilled in the art may also be employed for this purpose.

Typical separators or diaphragms are polymeric in nature and may comprise any of a number of commercially available alternatives which would be apparent to a skilled person. Common examples include, for example, asbestos, or a Nafion® (sulphonated tetrafluoroethylene based fluoropolymer copolymer) cationic selective membrane or a microporous polyethylene separator. In particular, separators used in the chlor-alkali industry may be beneficially used. The membranes used in the chlor-alkali industry are commonly made of perfluorinated polymers. The membranes may have from one up to three layers, but generally consist of two layers. One of these layers consists of perfluorinated polymer with substituted carboxylic groups and is adjacent to the cathodic side. The other layer consists of perfluorinated polymer with substituted sulphonic groups and is adjacent to the anodic side. To give the membrane mechanical strength, the membrane is generally reinforced with PTFE fibres. Without limiting the generality of the foregoing, a suitable separator may also be a PMX® membrane from De Nora.

During operation, it has been observed that the cathode may become coated with a white scaling. In general, the reaction at the cathode consumes acid and the pH of the cathode chamber increases throughout the course of the electrolysis, from about 1.4 to close to 9. In comparison, the reaction at the anode produces acid and the pH of the anode chamber decreases from about 1.4 to about 0.6. Without being bound by theory, such a white scaling may be dicalcium phosphate (CaHPO₄) that precipitates as the pH increases. As used herein, pH is the conventional unit for hydrogen ion activity in an aqueous solution measured at 25°C at 1 atmosphere pressure [i.e. ISO standard state]. Accordingly, in order to determine whether the pH of the catholyte is acidic or in a specific pH range, a sample of the catholyte may be measured at 25°C at 1 atmosphere pressure. As fresh anolyte is added to the electrochemical cell, continued electrolysis requires that the pH of the cathode chamber be adjusted. This may be done by adding acid to the existing catholyte or by replacing the catholyte entirely.

It has been found that the treated anolyte, instead of being discarded or recirculated back to the industrial plant, can be directed to the cathode chamber and used as the catholyte in the subsequent electrolysis with fresh anolyte from the industrial plant. In this way, the pH of the cathode chamber can be easily managed and white scaling on the cathode may not observed at all and if it is observed, it may not be as extensive and it may be delayed. Any scaling will depend on the particular conditions under which the anolyte is directed to the cathode chamber during operation.

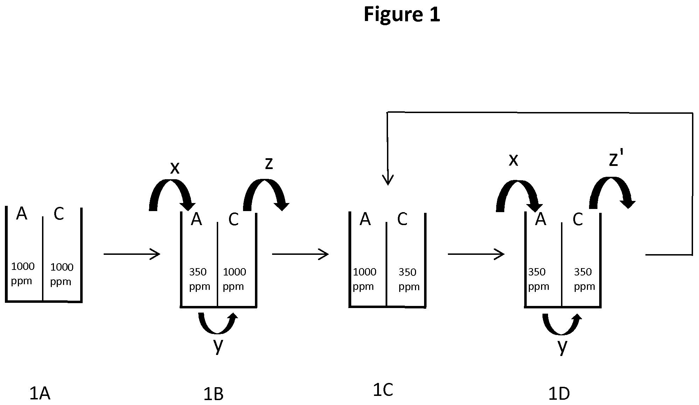

An embodiment is shown schematically as Figure 1. Initially, the anolyte in the anode chamber A and the catholyte in the cathode chamber B may be the same wastewater containing approximately 1000 ppm chloride as shown in 1A. After the initial electrolysis, the chloride concentration in the anolyte would be reduced to, for example 350 ppm. Fresh anolyte is added to the anode chamber A as shown by arrow x. The anolyte is moved to the cathode chamber as arrow y and the catholyte, with approximately 1000 ppm chloride could be sent and mixed with the source of industrial wastewater or otherwise discarded, as shown by arrow z. This leads to the electrochemical cell shown in 1C where the anode chamber contains fresh wastewater with approximately 1000 ppm chloride and the cathode chamber contains the treated wastewater from 1B. Electrolysis of the cell in 1C leads to the cell in 1D wherein both the anode chamber and the cathode chamber contain treated wastewater. In this embodiment, fresh wastewater is added to the anode chamber as shown by arrow x, the treated wastewater from the anode chamber is moved to the cathode chamber as shown by arrow y, and the catholyte is removed from the electrochemical cell as shown by arrow z'. However, in electrochemical cell 1D, the catholyte had been previously treated and can then be released to the environment, or in more preferred embodiments, recirculated back to the industrial plant. The electrochemical cell with the fresh wastewater in the anode chamber and the treated wastewater in the cathode chamber would then be identical to the electrochemical cell in 1C. In this way, the steps in 1C and 1D can be repeated indefinitely. In the case of a nitrophosphate fertilizer plant, the treated wastewater from the cathode chamber would then be sent to the calcium nitrate filters in batches after every cycle.

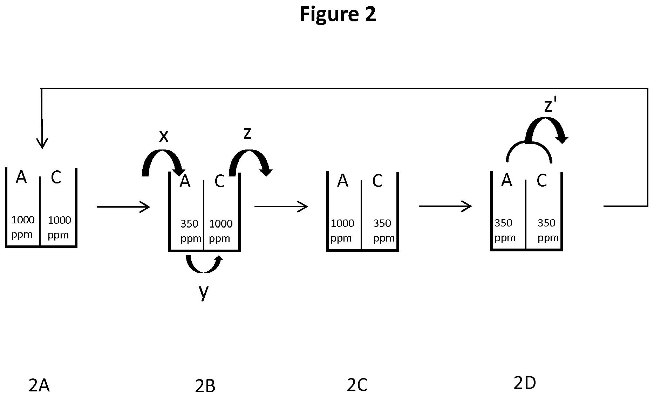

An alternative embodiment of the invention is shown in Figure 2 where the initial steps are the same. Industrial wastewater containing approximately 1000 ppm is added to both the anode chamber and the cathode chamber in electrochemical cell 2A. After electrolysis, the cathode chamber contains catholyte of approximately 1000 ppm chloride whereas the anode chamber contains treated wastewater of, for example, 350 ppm chloride. Arrow x shows the introduction of fresh wastewater. Arrow y shows how the treated wastewater in the anode chamber is moved to the cathode chamber and arrow z shows how the catholyte, still containing approximately 1000 ppm chloride is discarded. This leads to the electrochemical cell in 2C which is comparable to the electrochemical cell in Figure 1C. Similarly, electrolysis of the electrochemical cell 2C leads to treated wastewater in both the anode chamber and the cathode chamber as shown as electrochemical cell 2D. However, in this embodiment, the treated wastewater from both electrode chambers can be mixed and either released to the environment or recirculated back to the industrial plant as shown by arrow z'. With new wastewater being added to the electrochemical cell in both the anode and cathode chambers, the cycle returns to electrochemical cell 2A and this cycle can be continued effectively for as long as desired. As with the embodiment in Figure 1, treated wastewater could be sent to the calcium nitrate filters after every cycle, but the cycles would be twice as long resulting in twice as much treated wastewater with each cycle.

In both of Figures 1 and 2, the initial catholyte in 1A and 2A was the industrial wastewater. This is simply a specific embodiment for illustrative purposes only and is not intended to limit the generality of the method.

There are specific and particular benefits to using this method for the removal of chloride from wastewater from a fertilizer industrial plant, more particularly from nitrophosphate fertilizer wastewater or wastewater from other mineral or organo-mineral fertilizer processes. For example, alternative ways of controlling the pH would be to either add extraneous acid into the catholyte system or to replace the catholyte with fresh electrolyte with acidic pH. Further, phosphate is also present in the fertilizer wastewater and can precipitate forming a white scaling on the cathode if the pH is not properly controlled. Using the present system reduces the costs associated with either of these alternatives of purchasing and adding extraneous acid or catholyte. In addition, it is easier to maintain control over the overall water balance. Nonetheless, the invention should not be considered as limited to fertilizer wastewater and could be easily applied for the removal of chloride or other impurities from other types of industrial wastewaters. Any wastewater treatment using electrolysis whereby the anode and cathode chambers are separated by a separator could benefit from this method.

Some care should be exercised in this method as oxygen and chlorine gas are formed at the anode and hydrogen gas is formed at the cathode. Typically, the gases would be separated as they evolve from the electrodes during the electrolysis. Nonetheless, anolyte will be a solution saturated with oxygen gas. Once the anolyte is transferred to the cathode chamber, further electrolysis leads to the potential of small amounts of a mixture of flammable gases being formed. The solubility of oxygen is not particularly high, nonetheless, this is a potential risk that should be addressed to ensure safe operation : both chlorine and oxygen should be removed from the anolyte prior to transfer to the catholyte. There are many methods known in the art for removing a dissolved gas from solution. For example, dissolved gas can be removed by: gas sparging, using a stripping tower, applying a vacuum, or boiling.

Gas sparging can be used with an inert gas such as nitrogen and in which the gas can be injected through the electrolyte either at the same time as the electrolysis or once the electrolysis has been stopped. If gas sparging is done simultaneously with the electrolysis, the gas sparging may have an added benefit of increasing the rate of mass transfer. The gas flow rate affects the degree to which dissolved oxygen is removed from the electrolyte and a person of skill in the art would be able to modify the flow rate depending on the gas injection depth, degree of electrolysis and desired final concentration of oxygen. Typically, flow rates of 50 to 500 l/s would be expected, more particularly 100 to 300 l/s. Primary advantages of using gas sparging is that it is relatively simple and inexpensive to introduce into the electrolytic cell and to operate, and the energy requirements for the compressor are reasonable. However, relatively large volumes of gas may be needed to effectively remove sufficient chlorine gas from the electrolyte.

In comparison, a gas stripping tower is a process by which a liquid (the wastewater electrolyte) is brought into intimate contact with a gas, so that the oxygen dissolved in the liquid transfers to the vapour phase. In industrial applications, the liquid and vapour streams can have co-current or countercurrent flows. Stripping is mainly conducted in trayed towers (plate columns) and packed columns, and less often in spray towers, bubble columns, and centrifugal contactors. Frequently, steam, air, inert gases, and hydrocarbon gases are used as stripping agents. The choice of gas depends on solubility, stability, degree of corrosiveness, and availability.

Stripping towers typically have diameters of 0.5 to 3 m and heights of 1 to 15 m. The height of the packed tower will affect the removal efficiency of the oxygen. The desired rate of flow of the liquid to be treated will determine the diameter of the air stripping column. The type of packing material will have an impact on the mass transfer rate of chlorine and oxygen into the gas phase, because the surface area of the packing provides the air-to-water interfacial area. The air-to-water ratio ranges from as low as five to several hundred and is controlled by flooding and pressure drop considerations. The ratio of air-to-water flow through the air stripper will control the removal rate of the chlorine and oxygen gases. An increase in the air-to-water ratio will usually result in greater removal rates, up to a point at which entrainment of the liquid by the air flow occurs, resulting in a sharp increase in the air pressure drop through the stripping column. This phenomenon is known as flooding. The opposite condition occurs when the liquid flow rate is increased until the tower begins to fill with liquid. This is also referred to as flooding. The pressure drop in the tower should be between 200 and 400 N/m² per meter of tower height to avoid flooding. The person skilled in the art can readily determine an appropriate gas velocity sufficiently removed from the flooding velocity to ensure safe operation. The flooding velocity depends on the type and size of packing and liquid mass velocity. Lowering the design velocity increases the tower diameter without much change in required height, since lower gas and liquid velocities lead to a proportional reduction in mass-transfer rate. Channeling occurs when water flows down the tower wall rather than through the packing. Distribution plates should be placed approximately every 5 to 10 meter in the tower immediately above each packing section to avoid channeling. Channeling can be more severe in towers filled with stacked packing than in dumped packings. Using a smaller size packing can reduce the tendency of flow to channel. In towers of moderate size, channeling can be minimized by having the diameter of the tower at least 8 times the packing diameter. A packing material that offers a large surface area for mass transfer will usually present more resistance to countercurrent air flow, causing a higher gas pressure drop. Different materials may also offer better resistance to corrosion, encrustation, or unfavorable water conditions. Initial packing material selection would typically be made so as to provide a low gas pressure drop that allows an increase in removal efficiency.

As stripping agents are gases, it may be beneficial to operate the stripping tower at close to the highest temperature and lowest pressure that will maintain the components and not vaporize the liquid feed stream. This allows for the minimization of the flow.

It is clear that stripping oxygen and chlorine gases requires more routine optimization for the skilled person as compared to simply gas bubbling as discussed above and is a more complex system. Nevertheless, there may be additional benefits in terms of oxygen removal efficiency and the use of smaller amounts of gas.

The final two methods mentioned above (i.e. applying a vacuum and boiling) simply involve lowering the pressure and increasing the temperature of the electrolyte respectively. These methods are not exclusive to each other or to either gas sparging or using a stripping tower. Applying a vacuum may result in boiling of the electrolyte without increasing the temperature. A simple vacuum degassing unit may be sufficient to remove the dissolved gas from solution.

At the anode, the reaction can be broken down into several discrete steps:
1. transport of the chloride by diffusion, migration or convection from the bulk solution to the surface of the electrode (mass transport);
2. desolvation of the solvated chloride
3. oxidation of the chloride ion on the anode surface (charge transfer)
4. evolution of the chlorine gas.

In the electrolysis of chloride from industrial effluent from the fertilizer industry, and more particularly where the nitrophosphate, other mineral or organo-mineral process is used, the first step, namely the mass transport is the limiting step. This is due to the relatively dilute chloride concentrations that are present which are typically on the order of only 1000 ppm.

In electrochemistry, one of the main ways to increase the mass transfer of various processes is the relative movement of the electrode-electrolyte. Besides allowing the use of higher current densities and thereby increasing the production rate and improving the flow regime, it can also help in the removal of chlorine gas.

There are many different methods of increasing the mass transfer known in the art, for example by mechanical stirring of the electrolyte, vibrating the electrodes, rotating the electrodes, ultrasonification of the electrode/electrolyte, the use of 3D electrodes, and the incorporation of inert mesh turbulence promoters.

It has also been found that mass transfer may also be increased through the use of jets used to force the convection along the anode. The jet stream of electrolyte may be from a nozzle, such as a tube, or a hole or the like, directed at an angle, often perpendicularly to the surface of the anode. The mass transfer coefficient will be very high at the centre of the jet (also known as the stagnation point) and it decreases with increasing distance from the stagnation point. An overview of the literature in this field is in Zuckerman and Lior, "Jet impingment heat transfer: physics, correlations, and numerical modelling", Advances in Heat Transfer, 39, 565-631 (2006). The use of such jets may be referred to as "electrolyte jetting". A jet stream may also reduce the retention time of the produced chlorine, reducing the risk of back reaction to chloride.

The jets may comprise standard pumps that direct anolyte through feed pipes with holes of the appropriate diameter. The orientation of the holes can then be adjusted to direct the flow of anolyte towards the anode. In some embodiments, the jets may be located at the base of the electrochemical cell though a person skilled in the art would be able to optimize, through routine experimentation, the placement of the jets, the number of jets, the size of the holes, and the velocity of the resulting anolyte flow depending on the dimensions and orientation of the particular electrochemical cell.

Jets can be easily adapted for many different electrochemical cells, both at the laboratory testing scale and in industrial use. It simply involves adjusting the stream velocity, orientation, and number of jets to be practicable for a large number of different sizes and orientations of electrochemical cells. This can be done without any inventive skill and involves merely routine optimization. This is in contrast to many of the other techniques where it may be necessary to use only specific sizes or orientations of the underlying electrochemical cell in order to efficiently increase the mass transfer. For example, ultrasound is mentioned often in the literature where the ultrasound causes the implosion of bubbles leading to shock waves and turbulence. However, this requires a relatively high power source that is located close to the electrodes making it practical for only relatively small cells.

Electrolyte jetting may also be used at the cathode to avoid high local pH and scaling of the cathode. In this case, a second set of pumps would be used to prevent premature mixing of anolyte and catholyte.

Using electrolyte jets allows a much more efficient electrolysis and permits the chloride concentration to be reduced to below 500 ppm, more particularly below 350 ppm, below 300 ppm or below 250 ppm. The components of the cell, including the electrolytes and fluid circuits are adapted to handle the gas evolution, such that the evolved gases may be disengaged from the fluid streams and then suitably post-treated.

For safety reasons when recirculating wastewater back to a nitrophosphate fertilizer plant, lower ultimate levels of chloride or chlorine that is obtained would be better. Nevertheless, for most practicable purposes a level of lower than 500, more particularly lower than 350 ppm would normally be considered acceptable. Even lower levels may be obtained, such as below 250 ppm, below 200 ppm, or below 150 ppm.

The duration of the electrolysis steps may be less than 24 hours, more particularly less than 8 hours, more particularly less than 3 hours, or less than 2 hours. In some embodiments the electrolysis is from as little as 5 minutes, for example from 5 minutes to 24 hours, 5 minutes to 8 hours, 5 minutes to 3 hours, 5 minutes to 2 hours, 5 minutes to 1 hour, 30 minutes to 24 hours, 30 minutes to 8 hours, 30 minutes to 3 hours, 30 minutes to 2 hours, 1-8 hours, 1-4 hours, 1-3 hours, or 1-2 hours.

### Example

An electrochemical cell was equipped with an anode which was a dimensional stable anode from Permascand, and the cathode was SS 316 stainless steel. The membrane separator was a PMX® membrane from De Nora. The pH of both the anode and cathode electrolytes were monitored continuously with pH electrodes. A chloride sensitive electrode was used on the anode side to continuously measure chloride concentration.

The electrolyte used was wastewater from Yara International in Porsgrunn and was representative of industrial wastewater from the nitrophosphate process to make a complex fertilizer. The anodic current density was 62 A m⁻². The electrochemical cell was further equipped with two pumps, one for the anolyte and the other for the catholyte. The pumps were used with a feed pipe at the base of the electrochemical cell to create jets of electrolyte that were directed towards the respective electrodes.

The construction material of the cell was PVC. The main compartment was machined out of a 60 mm thick PVC block. The screws are made of 316 except for the screws fixing the anode that is made of PVC . The O-rings are made of Viton.

The anolyte and the catholyte were fed through the electrolyte inlets shown at the bottom of the cell and further into electrolyte jets. The jets were simply holes in a metal tube with a diameter of 2 mm (four holes in each inlet tube). The electrolyte was further flowed through the electrolyte outlet and into a small reservoir with Cl⁻ selective electrode and pH electrode. The electrolyte was then directed to a pump (and pumped back into the electrolyte cell. The normal flow rate was about 50 l h⁻¹, equivalent to a fluid speed out of the jets of approximately 2.2 m s⁻¹.

The separator was placed on a 20 mm wide terrace machined out in the PVC and fixed with a 5 mm thick PVC frame. This frame separated the gasses from the anode and the cathode. Both the electrodes were screwed to the inner wall of the cell, and a current collector went through the cell wall equipped with an O-ring seal.

The additional jets directed towards the cathodes were used to avoid high local pH and reduce any cathode scaling.

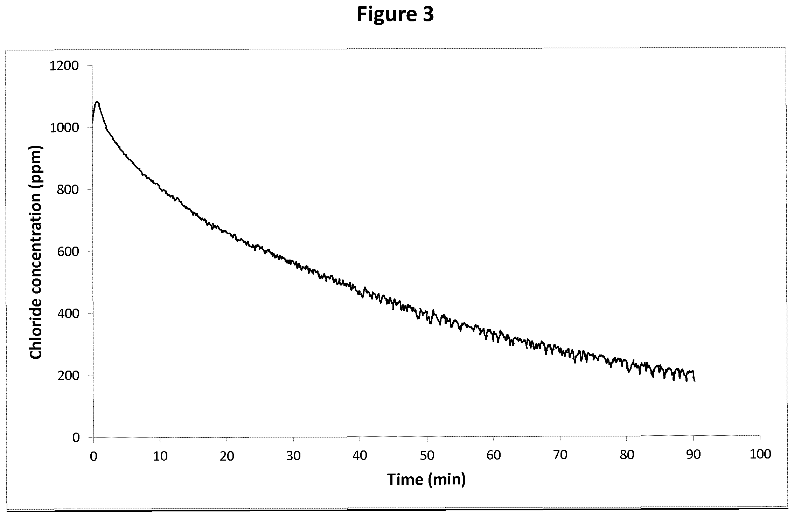

Figure 3 illustrates a typical experiment where the chloride concentration was measured with the electrolysis operated at 240 Am⁻². Calculations showed that the Faradaic current efficiency was about 9 % for chloride removal.

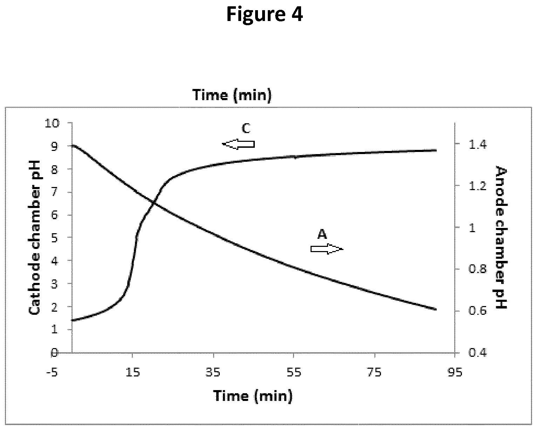

Figure 4 shows the pH in both the cathode chamber and the anode chamber as a function of time. From Figure 4, it can be seen that the pH in the cathode chamber is increasing from 1.4 to about 9 and the pH in the anode chamber is decreasing from 1.4 to about 0.6. The high pH has been associated with a white scaling on the cathode.

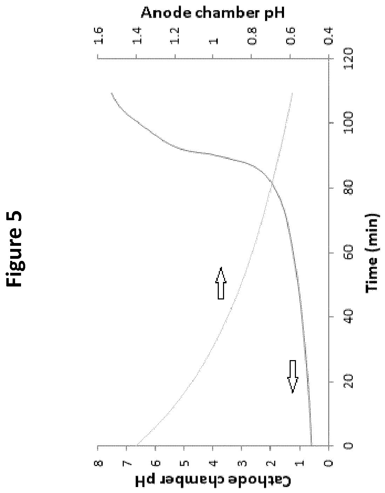

In Figure 5, the electrolyte from the cathode chamber was discarded and the electrolyte from the anode chamber was then transferred to the cathode chamber. Fresh wastewater was added to the anode chamber and the electrolysis re-initiated. The pH in the cathode thus starts at about 0.6 and increases over the course of the electrolysis to almost 8. The pH in the anode starts at 1.4 and decreases over the electrolysis to 0.6.

The current efficiency was not reduced on recirculating the anolyte from the run in Figure 4 to that in Figure 5. The pH does not increase as much in Figure 5 and this because the starting pH is lower: 0.6 compared to 1.4. During the electrolysis, it thus takes longer for the acid to be consumed and for the pH of the catholyte to increase to the alkaline region. Any scaling of the cathode would thus be reduced and delayed. No white scaling was observed on the cathode electrode as would otherwise be expected.

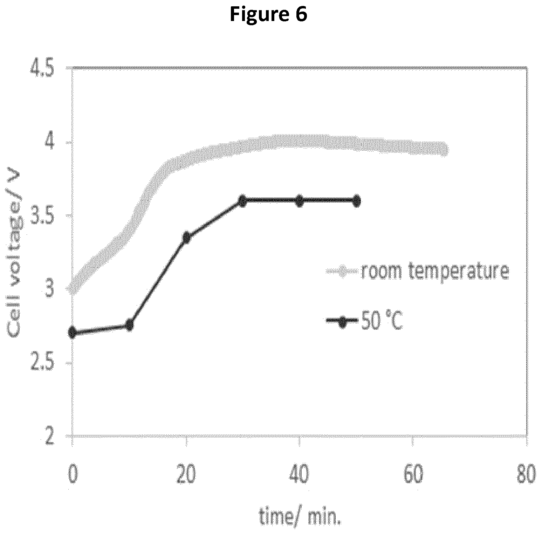

In Figure 6, it is demonstrated an improved efficiency when performing the electrolytic treatment of wastewater at 50°C compared to treatment of wastewater at 25°C. The current efficiency from 1000 ppm to 350 ppm was calculated to be 8.6%, which is approximately the same as for room temperature. The cell voltage is about 250 mV less for the experiment carried out at 50°C. The current efficiency is almost the same at the two temperatures implying that it is beneficial to operate the electrolysis at a higher temperature. Higher temperature would also be beneficial due to lower solubility of gases in the anolyte.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is defined in the appended claims.

## Claims

1. Method of treating acidic wastewater from an industrial plant comprising:
a. directing acidic wastewater from the industrial plant to an electrochemical cell having an anode chamber and a cathode chamber separated by a separator;
b. filling the anode chamber with the wastewater;
c. filling the cathode chamber with the wastewater as catholyte;
d. treating the wastewater in the anode chamber by electrolysis while the pH in the catholyte is acidic;
e. removing the catholyte from the cathode chamber,
f. directing the treated wastewater from the anode chamber to the cathode chamber, and
g. adding new wastewater into the anode chamber
h. treating the new wastewater in the anode chamber with electrolysis while the pH in the treated wastewater catholyte is acidic.

2. The method of claim 1 further comprising
i. removing the treated wastewater catholyte from the cathode chamber,
j. directing the treated wastewater from the anode chamber to the cathode chamber, and
k. adding new wastewater into the anode chamber.

3. The method of claim 1 further comprising the step
I. removing the treated wastewater from both the cathode chamber and the anode chamber and directing new wastewater to both the anode chamber and the cathode chamber of the electrochemical cell.

4. The method of claim 1 further comprising repeating the steps e. to g.

5. The method of claim 3 further comprising repeating the steps d. to g.

6. The method of any one of claims 1-5 further comprising after step d. and optionally after step h. removing dissolved gas from the treated wastewater in the anode chamber before performing step f. and optionally before performing step i., of directing the treated wastewater from the anode chamber to the cathode chamber.

7. The method of claim 6 wherein the removing dissolved gas comprises at least one of using gas sparging, using a stripping tower, applying a vacuum, increasing the temperature of the wastewater.

8. The method of claim 7 wherein the method uses a stripping tower or a vacuum is applied.

9. The method of claim 2 or claim 3 wherein the treated wastewater removed in step i. or in step I. is recirculated to the industrial plant.

10. The method of any one of claims 1-9 wherein the method of treating wastewater is a method to remove chloride ions from wastewater comprising phosphate and the treating the wastewater by electrolysis step involves removing chloride from the wastewater by electrolysis.

11. The method of claim 10 wherein the chloride concentration is reduced to less than 500 ppm.

12. The method of claim 10 wherein the chloride concentration is reduced to less than 350 ppm.

13. The method of claim 10 wherein the chloride concentration is reduced to less than 250 ppm.

14. The method of any one of claims 1-13 wherein the electrolysis step d. and optionally step h. includes increasing the mass transport within the electrochemical cell.

15. The method of claim 14 wherein the mass transport is increased by mechanical stirring of the electrolyte, vibrating the electrodes, rotating the electrodes, using ultrasonication on the electrode or
electrolyte, using 3D electrodes or inert mesh turbulence promoters, or electrolyte jetting.

16. The method of claim 14 wherein the mass transport is increased by electrolyte jetting.

17. The method of any one of claims 1-16 wherein the electrolysis step d. and optionally step h. is performed for between 5 minutes and 24 hours.

18. The method of any one of claims 1-16 wherein the electrolysis step d. and optionally step h. is performed for between 1 and 8 hours.

19. The method of any one of claims 1-18 wherein the industrial plant is a fertilizer plant.

20. The method of claim 19 wherein the fertilizer plant is a nitrophosphate, other mineral or organo-mineral fertilizer plant.

21. The method of claim 19 wherein the fertilizer plant is a nitrophosphate fertilizer plant.

22. The method of any one of claim 1 to 21 wherein the pH in the catholyte is below 4.0

23. The method of any one of claim 1 to 22 wherein the pH in the catholyte is below 3.0.

24. The method of any one of the claims 1 to 23, wherein step d. and optionally step h. of the method further comprises measuring the pH of the catholyte and if required adding an acid or acidic solution to the catholyte.

25. The method of any one of claim 1 to 24 wherein the treatment of the wastewater by electrolysis is performed in a batchwise mode.

26. The method of any one of claims 1 to 25 wherein the temperature of the anolyte and/or the catholyte is over 30°C.

## Patentansprüche

1. Verfahren zur Behandlung von saurem Abwasser aus einer Industrieanlage, umfassend:
a. Leiten von saurem Abwasser aus der Industrieanlage zu einer elektrochemischen Zelle mit einem Anodenraum und einem Kathodenraum, die durch einen Separator getrennt sind;
b. Füllen des Anodenraums mit dem Abwasser;
c. Füllen des Kathodenraums mit dem Abwasser als Katholyt;
d. Behandeln des Abwassers im Anodenraum durch Elektrolyse, während der pH-Wert im Katholyten sauer ist;
e. Entnehmen des Katholyten aus dem Kathodenraum,
f. Leiten des behandelten Abwassers aus dem Anodenraum zum Kathodenraum, und
g. Einleiten von neuem Abwasser in den Anodenraum
h. Behandeln des neuen Abwassers im Anodenraum durch Elektrolyse, während der pH-Wert im behandelten Abwasserkatholyten sauer ist.

2. Verfahren nach Anspruch 1, ferner umfassend
i. Entnehmen des behandelten Abwasserkatholyten aus dem Kathodenraum,
j. Leiten des behandelten Abwassers aus dem Anodenraum zum Kathodenraum, und
k. Einleiten von neuem Abwasser in den Anodenraum.

3. Verfahren nach Anspruch 1, ferner umfassend den Schritt
l. Entnehmen des behandelten Abwassers sowohl aus dem Kathodenraum als auch aus dem Anodenraum und Leiten von neuem Abwasser sowohl zum Anodenraum als auch zum Kathodenraum der elektrochemischen Zelle.

4. Verfahren nach Anspruch 1, ferner umfassend Wiederholen der Schritte e. bis g.

5. Verfahren nach Anspruch 3, ferner umfassend Wiederholen der Schritte d. bis g.

6. Verfahren nach einem der Ansprüche 1 bis 5, ferner umfassend nach Schritt d. und gegebenenfalls nach Schritt h. Entfernen von gelöstem Gas aus dem behandelten Abwasser in dem Anodenraum vor dem Durchführen von Schritt f. und gegebenenfalls vor dem Durchführen von Schritt i. zum Leiten des behandelten Abwassers aus dem Anodenraum zum Kathodenraum.

7. Verfahren nach Anspruch 6, wobei das Entfernen von gelöstem Gas Durchperlen, Verwenden einer Stripkolonne, Anlegen eines Vakuums und/oder Erhöhen der Temperatur des Abwassers umfasst.

8. Verfahren nach Anspruch 7, wobei in dem Verfahren eine Stripkolonne eingesetzt oder ein Vakuum angelegt wird.

9. Verfahren nach Anspruch 2 oder Anspruch 3, wobei das in Schritt i. oder in Schritt l. entnommene behandelte Abwasser in die Industrieanlage zurückgeführt wird.

10. Verfahren nach einem der Ansprüche 1 bis 9, wobei das Verfahren zur Behandlung von Abwasser ein Verfahren zum Entfernen von Chloridionen aus phosphathaltigem Abwasser ist und der Schritt der Behandlung des Abwassers durch Elektrolyse das Entfernen von Chlorid aus dem Abwasser durch Elektrolyse umfasst.

11. Verfahren nach Anspruch 10, wobei die Chloridkonzentration auf unter 500 ppm gesenkt wird.

12. Verfahren nach Anspruch 10, wobei die Chloridkonzentration auf unter 350 ppm gesenkt wird.

13. Verfahren nach Anspruch 10, wobei die Chloridkonzentration auf unter 250 ppm gesenkt wird.

14. Verfahren nach einem der Ansprüche 1 bis 13, wobei der Elektrolyseschritt d. und gegebenenfalls Schritt h. ein Erhöhen des Massentransports in der elektrochemischen Zelle umfasst.

15. Verfahren nach Anspruch 14, wobei der Massentransport durch mechanisches Rühren des Elektrolyten, Versetzen der Elektroden in Schwingungen, Drehen der Elektroden, eine Ultraschallbehandlung der Elektrode oder des Elektrolyten, die Verwendung von 3D-Elektroden oder inerten Gitter-Turbulenzerzeugern oder Einspritzen des Elektrolyten verstärkt wird.

16. Verfahren nach Anspruch 14, wobei der Massentransport durch Einspritzen des Elektrolyten verstärkt wird.

17. Verfahren nach einem der Ansprüche 1 bis 16, wobei der Elektrolyseschritt d. und gegebenenfalls Schritt h. zwischen 5 Minuten und 24 Stunden lang durchgeführt wird.

18. Verfahren nach einem der Ansprüche 1 bis 16, wobei der Elektrolyseschritt d. und gegebenenfalls Schritt h. zwischen 1 und 8 Stunden lang durchgeführt wird.

19. Verfahren nach einem der Ansprüche 1 bis 18, wobei die Industrieanlage eine Düngemittelanlage ist.

20. Verfahren nach Anspruch 19, wobei die Düngemittelanlage eine Anlage für Stickstoff-Phosphor-Dünger, andere mineralische Dünger oder organischmineralische Dünger ist.

21. Verfahren nach Anspruch 19, wobei die Düngemittelanlage eine Anlage für Stickstoff-Phosphor-Dünger ist.

22. Verfahren nach einem der Ansprüche 1 bis 21, wobei der pH-Wert im Katholyten unter 4,0 liegt.

23. Verfahren nach einem der Ansprüche 1 bis 22, wobei der pH-Wert im Katholyten unter 3,0 liegt.

24. Verfahren nach einem der Ansprüche 1 bis 23, wobei Schritt d. und gegebenenfalls Schritt h. des Verfahrens ferner Messen des pH-Werts des Katholyten und bei Bedarf Zugeben einer Säure oder Säurelösung zu dem Katholyten umfasst.

25. Verfahren nach einem der Ansprüche 1 bis 24, wobei die Abwasserbehandlung durch Elektrolyse diskontinuierlich durchgeführt wird.

26. Verfahren nach einem der Ansprüche 1 bis 25, wobei die Temperatur des Anolyten und/oder des Katholyten über 30°C beträgt.

## Revendications

1. Procédé de traitement d'eaux usées acides d'une installation industrielle comprenant :
a. l'acheminement d'eaux usées acides de l'installation industrielle à une cellule électrochimique possédant une chambre anodique et une chambre cathodique séparées par un séparateur ;
b. le remplissage de la chambre anodique avec les eaux usées ;
c. le remplissage de la chambre cathodique avec les eaux usées en tant que catholyte ;
d. le traitement des eaux usées dans la chambre anodique par électrolyse alors que le pH dans le catholyte est acide ;
e. l'élimination du catholyte de la chambre cathodique,
f. l'acheminement des eaux usées traitées de la chambre anodique à la chambre cathodique, et
g. l'ajout de nouvelles eaux usées dans la chambre anodique
h. le traitement des nouvelles eaux usées dans la chambre anodique par électrolyse alors que le pH dans le catholyte d'eaux usées traitées est acide.

2. Procédé selon la revendication 1, comprenant en outre
i. l'élimination du catholyte d'eaux usées traitées de la chambre cathodique,
j. l'acheminement des eaux usées traitées de la chambre anodique à la chambre cathodique, et
k. l'ajout de nouvelles eaux usées dans la chambre anodique.

3. Procédé selon la revendication 1, comprenant en outre l'étape
l. d'élimination des eaux usées traitées à la fois de la chambre cathodique et de la chambre anodique et l'acheminement de nouvelles eaux usées à la fois à la chambre cathodique et à la chambre anodique de la cellule électrochimique.

4. Procédé selon la revendication 1, comprenant en outre la répétition des étapes e. à g..

5. Procédé selon la revendication 3, comprenant en outre la répétition des étapes d. à g..

6. Procédé selon l'une quelconque des revendications 1 à 5 comprenant en outre après l'étape d. et éventuellement après l'étape h., l'élimination de gaz dissous des eaux usées traitées dans la chambre anodique avant la réalisation de l'étape f. et éventuellement avant la réalisation de l'étape i., d'acheminement des eaux usées traitées de la chambre anodique à la chambre cathodique.

7. Procédé selon la revendication 6, l'élimination de gaz dissous comprenant au moins l'un parmi l'utilisation de barbotage de gaz, l'utilisation d'un rectificateur, l'application d'un vide, l'augmentation de la température des eaux usées.

8. Procédé selon la revendication 7, le procédé utilisant un rectificateur ou un vide étant appliqué.

9. Procédé selon la revendication 2 ou la revendication 3, les eaux usées traitées éliminées dans l'étape i. ou dans l'étape l. étant recirculées à l'installation industrielle.

10. Procédé selon l'une quelconque des revendications 1 à 9, le procédé de traitement des eaux usées étant un procédé pour éliminer des ions chlorure des eaux usées comprenant du phosphate et l'étape de traitement des eaux usées par électrolyse impliquant l'élimination de chlorure des eaux usées par électrolyse.

11. Procédé selon la revendication 10, la concentration en chlorure étant réduite à moins de 500 ppm.

12. Procédé selon la revendication 10, la concentration en chlorure étant réduite à moins de 350 ppm.

13. Procédé selon la revendication 10, la concentration en chlorure étant réduite à moins de 250 ppm.

14. Procédé selon l'une quelconque des revendications 1 à 13, l'étape d'électrolyse d. et éventuellement l'étape h. comprenant l'augmentation du transport de masse dans la cellule électrochimique.

15. Procédé selon la revendication 14, le transport de masse étant augmenté par agitation mécanique de l'électrolyte, par vibration des électrodes, par rotation des électrodes, à l'aide d'ultrasonication sur l'électrode ou l'électrolyte, à l'aide d'électrodes 3D ou de promoteurs de turbulence maillés inertes, ou par projection d'électrolyte.

16. Procédé selon la revendication 14, le transport de masse étant augmenté par projection d'électrolyte.

17. Procédé selon l'une quelconque des revendications 1 à 16, l'étape d'électrolyse d. et éventuellement l'étape h. étant réalisées pendant entre 5 minutes et 24 heures.

18. Procédé selon l'une quelconque des revendications 1 à 16, l'étape d'électrolyse d. et éventuellement l'étape h. étant réalisées pendant entre 1 et 8 heures.

19. Procédé selon l'une quelconque des revendications 1 à 18, l'installation industrielle étant une usine d'engrais.

20. Procédé selon la revendication 19, l'usine d'engrais étant une usine d'engrais de type nitrophosphate, d'autres composés minéraux ou de composés organo-minéraux.

21. Procédé selon la revendication 19, l'usine d'engrais étant une usine d'engrais de type nitrophosphate.

22. Procédé selon l'une quelconque des revendications 1 à 21, le pH dans le catholyte étant inférieur à 4,0.

23. Procédé selon l'une quelconque des revendications 1 à 22, le pH dans le catholyte étant inférieur à 3,0.

24. Procédé selon l'une quelconque des revendications 1 à 23, l'étape d. et éventuellement l'étape h. du procédé comprenant en outre la mesure du pH du catholyte et si nécessaire l'ajout d'un acide ou d'une solution acide au catholyte.

25. Procédé selon l'une quelconque des revendications 1 à 24, le traitement des eaux usées par électrolyse étant réalisé selon un mode par lot.

26. Procédé selon l'une quelconque des revendications 1 à 25, la température de l'anolyte et/ou du catholyte étant supérieure à 30°C.
